# EUROPÄISCHE PATENTSCHRIFT

(11) **EP 1 016 056 B1**
(45) Veröffentlichungstag und Bekanntmachung des Hinweises auf die Patenterteilung: **16.05.2001**
(21) Anmeldenummer: 98951379.1
(22) Anmeldetag: 10.09.1998
(51) Int. Cl.: G09B 23/30

(54) **DEMONSTRATIONSEINRICHTUNG IN FORM EINES LEBEWESENS**
DEMONSTRATION DEVICE MODELLING A LIVING ORGANISM
DISPOSITIF DE DEMONSTRATION REPRESENTANT LE MODELE D'UN ETRE VIVANT

(30) Priorität: 12.09.1997 DE 19740207
(43) Veröffentlichungstag der Anmeldung: 05.07.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: WEINSPACH, Paul-Michael, D-44229 Dortmund (DE)
(86) Internationale Anmeldenummer: EP9805789
(87) Internationale Veröffentlichungsnummer: WO9914726

(56) Entgegenhaltungen:
- WO-A-97/27573
- DE-U- 9 313 774
- US-A- 4 865 550

## Beschreibung

Die Erfindung betrifft eine Demonstrationseinrichtung in Form eines Lebewesens in mindestens 50-facher Vergrößerung, wobei eine einen Hohlraum umgebende Außenhaut, die zumindest teilweise durchsichtig ist, der Form eines Lebewesens nachgebildet ist. In dem durch die Außenhaut der Demonstrationseinrichtung gebildeten Hohlraum sind Funktionselemente angeordnet, die den Organen des jeweiligen Lebewesens entsprechen.

Aufgrund der Komplexität der in Lebewesen, insbesondere im Menschen, vorhandenen Organe und Gelenke besteht ein großes Bedürfnis, die Funktionen dieser Organe und Gelenke auf einfache Weise transparent und verständlich zu machen.

Aus der G 93 13 774 ist ein Modell eines menschlichen Herzens bekannt, das als begehbares Gebäude ausgebildet ist. Dabei kann das Gebäude in einzelne transportable Teilsegmente als fliegender Bau zerlegbar ausgestaltet sein. Dies ermöglicht, daß das Modell für die Besucher an unterschiedlichen Plätzen bzw. auf Ausstellungen leicht und schnell montiert und demonstriert werden kann. Die Darstellung eines gesamten Organismus als Modell ist dagegen aus dieser Druckschrift nicht bekannt.

Die Wo 97/27573 offenbart ein vergrößertes Modell eines Menschen, in dem die menschlichen inneren Organe weitgehend an ihrer jeweiligen anatomisch entsprechenden Lage angeordnet sind. Dieses menschliche Modell ist auf dem Rücken mit dem Gesicht nach oben gelagert und zeigt ein androgynes menschliches Wesen. Die in dem menschlichen Modell angeordneten Organe sind zu Fuß begehbar. Dadurch wird gemäß der WO 97/27573 ein außergewöhnliches Abenteuergefühl sowie das Gefühl einer Entdeckungsreise vermittelt. Aufgrund der reinen Begehbarkeit des Modells ist es jedoch nicht möglich, die Anordnung und Funktion des menschlichen Organismus in didaktisch sinnvoller Weise in angemessener Zeit zu vermitteln. Ebenso wenig ist die Außenhaut durchsichtig, so daß kein Durchblick von außen in das Innere des Lebewesens möglich ist.

Demgegenüber zeigt die US 4,865,550 ein Modell zweier schlafender Menschen, in denen, nunmehr nicht in anatomisch richtiger Anordnung, die Organe eines einzelnen Menschen so angeordnet sind, daß sie durch eine Bahn befahrbar sind. Bei diesem Modell sind lediglich die Kopfbereiche voll ausgeformt, während die Außenform des die Organe enthaltenden Gebäudes in den restlichen Partien die Form einer Schlafdecke besitzt. Bei diesem Modell liegt folglich kein von außen als solches erkennbares Modell des Menschen vor. Hier wird nun wiederum die Vermittlung von Wissen über die Anordnung wie auch die Funktion der einzelnen menschlichen Organe nur mangelhaft vermittelt, da bei einer Fahrt durch die Organe für eine individuelle, dem jeweiligen Betrachter angemessene Wissensvermittlungszeit kein Raum bleibt.

Ausgehend hiervon ist es die Aufgabe der vorliegenden Erfindung, eine Demonstrationseinrichtung in Form eines Lebewesens anzugeben, mit der es möglich ist, die Funktionalität der wesentlichen Organe, Gefäßsysteme, Fortpflanzungsorgane, Gelenke und dergleichen, die im Lebewesen vorhanden sind, einem Betrachter in didaktisch optimierter Weise und in angemessener Zeit zugänglich und verständlich zu machen.

Diese Aufgabe wird durch den Oberbegriff des Anspruchs 1 in Verbindung mit seinen kennzeichnenden Merkmalen gelöst.

Die erfindungsgemäße Demonstrationseinrichtung wird mit ihren Funktionselementen mittels körperfunktionsspezifischer Wegesysteme erschlossen. Es sind befahrbare und auch begehbare Wegesysteme vorgesehen. Dadurch ist es möglich, dem einzelnen Betrachter eine seinen Interessen und seiner Auffassungsgabe entsprechende Herangehensweise an die einzelnen Organe, Gefäßsysteme und/oder Gelenke oder dergleichen zu ermöglichen. Beispielsweise kann er sich mittels einer Fahrt durch die einzelnen Organe auf rasche, spektakuläre und eindrückliche Weise einen raschen Überblick über die Zusammenhänge zwischen den einzelnen Organen etc. verschaffen und anschließend diejenigen Organe etc., an denen er ein besonderes Interesse hat, zu Fuß und unter Wahrnehmung detaillierterer Informationen, beispielsweise auch in auf'die Fähigkeiten von Kindern abgestimmten "Kinderzonen" bzw. "kindergerechten Funktionselementen", erschließen. Eine derartige iterative Herangehensweise ermöglicht eine optimierte Wissensvermittlung. In gleicher Weise ist eine Differenzierung der einzelnen Wissensvermittlungsarten per Bahn oder zu Fuß in Abhängigkeit vom Alter der Besucher der Demonstrationseinrichtung möglich. So kann beispielsweise auch Kindern, denen noch nicht über Schautafeln oder Experimente das Wissen um die Zusammenhänge der Organe des menschlichen Körpers vermittelt werden kann, dennoch eine Vorstellung mittels einer für diese Altersgruppe interessanten Bahnfahrt vermittelt werden.

Da die erfindungsgemäße Demonstrationseinrichtung der Form eines Lebewesens nachgebildet ist, muß sie eine Größe aufweisen, die es erlaubt, die Demonstrationseinrichtung vom Inneren her zu befahren bzw. zu begehen. Dementsprechend ist die Dimensionierung der Demonstrationseinrichtung auszuwählen. Im Regelfall ist deshalb eine mindestens 50-fache Vergrößerung erforderlich. Teile der Außenhaut, die die Demonstrationseinrichtung umgibt, sind durchsichtig gestaltet, um den Durchblick in das Innere des Lebewesens und beispielsweise auf ein anatomisch richtig angeordnetes Funktionselement freizugeben.

Vorteilhafte Weiterbildungen der erfindungsgemäßen Demonstrationseinrichtung werden in den abhängigen Ansprüchen gegeben.

Die Außenhaut kann als monolithische Schale oder als selbsttragende Halle ausgebildet sein und/oder durch Stützelemente getragen werden. Da die Demonstrationseinrichtung sowohl befahrbar als auch begehbar sein soll, ist es vorteilhaft, die Funktionselemente nicht ausschließlich nach ihrer anatomisch richtigen Lage in der Demonstrationseinrichtung anzuordnen, sondern entsprechend den einzelnen Zugangsmöglichkeiten im Interesse einer optimierten Nutzung des Innenraumes der Außenhülle anzuordnen. Es ist auch möglich, für die beiden Zugangsarten, Fahren und Gehen, getrennte Organsysteme anzulegen, da beide Zugangsarten verschiedene Aspekte vermitteln sollen. Die Zugangsart des Fahrens ist mehr auf einen spektakulären Fahreffekt angelegt, während bei den zu Fuß zugänglichen Funktionselementen, bei denen ein verweilen des Betrachters nach seinen Bedürfnissen möglich ist, auch detailliertes Wissen in Schriftform, beispielsweise durch Schautafeln, vermittelt werden kann.

Dementsprechend kann der Fahrweg in einer Röhre oder einer abgeschlossenen Röhre bzw. einem abgeschlossenen Röhrensystem mittels eines führerlosen Bahn-Kabinensystems mit einzelnen zentral angesteuerten Wägen verlaufen. Dadurch sind die Fahrtteilnehmer keiner Ablenkung durch nicht zum Fahrweg gehörende Elemente sowie durch voraus- oder hinterherfahrende Besucher ausgesetzt. Es ergibt sich insgesamt auch eine optimale kostengünstige Lösung, da die einzelnen Wagen in dichtem Abstand hintereinander herfahren können.

Bei der bevorzugten Ausführungsform der Demonstrationseinrichtung - für den Fall, daß ein Mensch nachgebildet wird - ergibt sich bei einer 80- bis 120fachen Vergrößerung eine optimierte Größe der Demonstrationseinrichtung. Günstigerweise ist die Demonstrationseinrichtung darin liegend angeordnet, so daß sich optimierte statische Verhältnisse sowie Begehbar- und Befahrbarkeit ergeben. Der Mensch kann dabei auf dem Bauch liegen, wobei er seinen Kopf über das Gelände erhebt. Besonders günstig für die statische Abstützung des sehr großen und schweren Kopfes ist es dann, wenn die Arme so angeordnet werden, daß der Kopf sich auf diese abstützt.

Die Außenhaut kann dabei als selbsttragende Halle ausgebildet sein oder durch Stützelemente getragen werden. Es kann sich hierbei entweder um eine selbsttragende Rahmenkonstruktion oder auch um eine Außenhaut handeln, die durch Stützpfeiler abgesichert ist. Erforderlich ist in jedem Fall, daß genügend Hohlraum in der Demonstrationseinrichtung verbleibt, um die entsprechenden Funktionselemente und Wegesysteme anzuordnen und zu besichtigen.

Das Material der Demonstrationseinrichtung kann entweder metallischer Natur sein, aus Beton oder dergleichen oder aus Kunststoffen gewählt sein. Die jeweilige Wandstärke richtet sich nach den Materialgegebenheiten.

Bei den Funktionselementen, die den Organen etc. des jeweiligen Lebewesens nachgebildet sind, handelt es sich im wesentlichen um die wichtigsten Organe etc. der Lebewesen. Für die bevorzugte Ausführungsform des Menschen sind Herz, Leber, Nieren, Magen, Verdauungstrakt, Sinnesorgane, Gehirn, Nerven- und Gefäßsystem, Lunge sowie die Groß- und Kleingelenke, wie Schultergelenke, Kniegelenke, Fingergelenke und Zehengelenke als Funktionseinrichtung vorzusehen.

Diese einzelnen Funktionselemente können interaktiv ausgebildet sein, so daß sie von dem Betrachter bedient werden können und die Funktion klar zutage tritt. Die Funktionsweise der Funktionselemente kann durch optische und/oder akustische Maßnahmen verdeutlicht werden.

Ein besonders interessanter didaktischer Zugang ergibt sich dann, wenn in den Funktionselementen den physiologischen Funktionen des dargestellten Organes das entsprechende technische, dem Betrachter oft sogar aus seinem Alltagsleben bekannte, Analogon zur Seite gestellt wird. Diese inhaltliche Vermittlung kann verbessert werden, indem den einzelnen Organsystemen, wie beispielsweise dem System bestehend aus Verdauungstrakt und inneren Organen bzw. aus Herz, Kreislauf und Lunge eigene Wegesysteme, beispielsweise eigene Schienenbahnen zugeordnet sind.

Im folgenden werden einige vorteilhafte Ausführungsformen der erfindungsgemäßen Demonstrationseinrichtung beschrieben. Es zeigen:
- Figur 1: eine erfindungsgemäße Demonstrationseinrichtung;
- Figur 2: ein Wegesystem;
- Figur 3: ein weiteres Wegesystem;
- Figur 4: eine weitere erfindungsgemäße Demonstrationseinrichtung;
- Figur 5: die Lagerung der erfindungsgemäßen Demonstrationseinrichtung aus Figur 3;
- Figur 6: die Zugangswege einer erfindungsgemäßen Demonstrationseinrichtung;
- Figur 7: die innere Anordnung einer erfindungsgemäßen Demonstrationseinrichtung;
- Figur 8: das Wegesystem im Brust- und Kopfbereich einer erfindungsgemäßen Demonstrationseinrichtung;
- Figur 9: ein Wegesystem einer erfindungsgemäßen Demonstrationseinrichtung;
- Figur 10: einen Querschnitt durch den Brustbereich einer erfindungsgemäßen Demonstrationseinrichtung;
- Figur 11: einen vertikalen Längsquerschnitt durch eine erfindungsgemäße Demonstrationseinrichtung;
- Figur 12: einen horizontalen Querschnitt durch eine erfindungsgemäße Demonstrationseinrichtung;
- Figur 13: einen weiteren horizontalen Querschnitt durch eine erfindungsgemäße Demonstrationseinrichtung; und
- Figur 14: einen weiteren horizontalen Längsquerschnitt durch eine erfindungsgemäße Demonstrationseinrichtung.

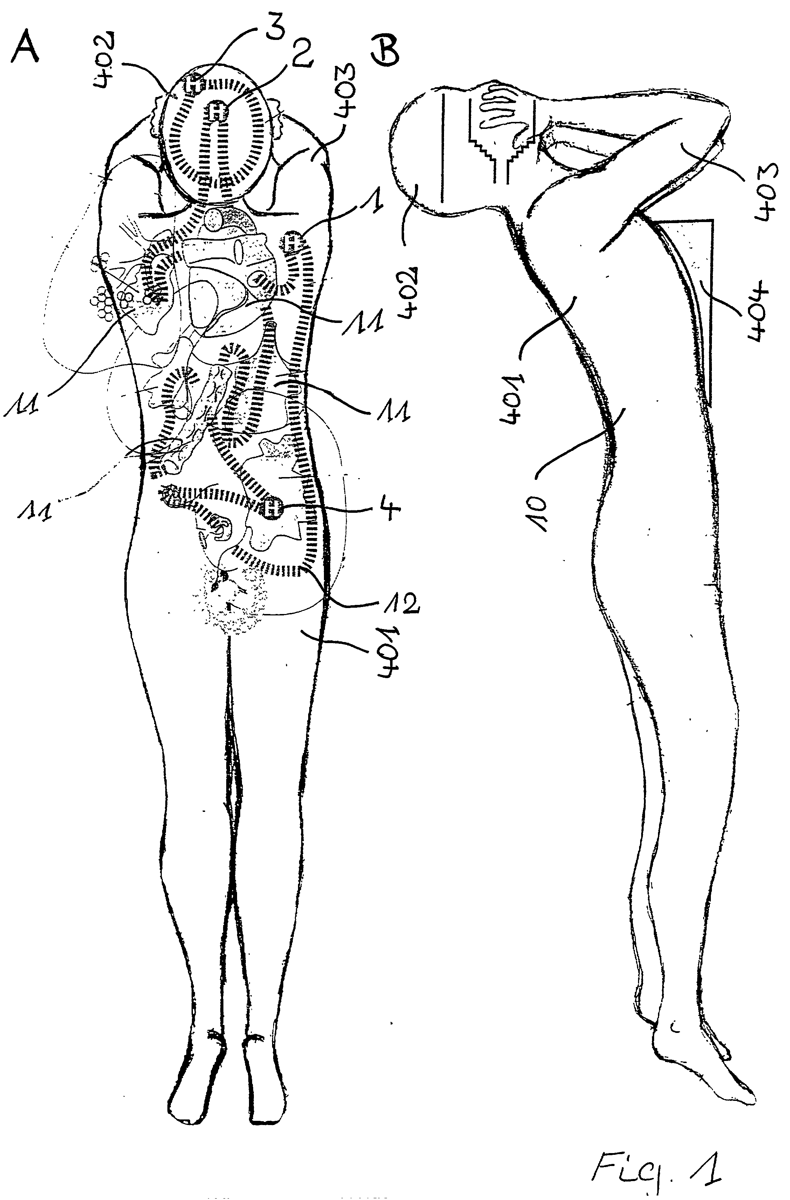

Figur 1 zeigt eine erfindungsgemäße Demonstrationseinrichtung 401. Diese besitzt eine Außenhaut 10 in Form eines Menschen. Dieser Mensch ist in liegender Form dargestellt, wobei sich ein Kopf 402 auf Arme 403 aufstützt. Zur statischen Stützung des Gebäudes in Form eines Menschen ist unterhalb des Brustbereiches als Aufliegefläche ein Unterbau 404 angeordnet.

Figur la zeigt den Weg einer Bahn 12 durch die in dem Menschen in anatomisch entsprechender Weise angeordneten als innere Organe ausgebildeten Funktionselemente 11. Der Einstieg in die Bahn 12 erfolgt beim Punkt 1 als Eintritt ins Herz über die Vena cava sup. Der Austritt aus dem Herzen erfolgt über die Arteria pulmonalis sinistra. Von dort fährt die Bahn 12 weiter in ein Funktionsorgan, das als Lunge ausgebildet ist. In einem Lungenbläschen erfolgt ein Wechsel auf die "Luftseite", die Bahn 12 fährt weiter durch die Luftröhre, was Ausatmen symbolisiert, in den Nasen/Rachenraum zum Punkt 2. In Punkt 2 kann der Betrachter die Mundhöhle kennenlernen. Von hier aus ist es dem Betrachter zu Fuß möglich, sich ein als Auge 3 oder auch ein als Ohr ausgestaltetes Funktionselement anzusehen oder einen Rundgang durch das "Gehirn" zu machen.

Die Bahnfahrt wird dann vom Punkt 2 aus als "Bissen" durch die Speiseröhre in den Magen und den Darm fortgesetzt. Vom Darm aus wechselt die Bahn 12 in ein als Leber ausgebildetes Funktionsorgan über und fährt weiter in die Niere zum Punkt 4. Im Punkt 4 erfolgt wiederum ein Wechsel der Bahn 12 in den Eileiter und von dort weiter in die Gebärmutter, von wo die Bahn 12 über eine Vene zurück zum Einstiegspunkt 1 fährt.

Figur 2 zeigt die Fahrt einer Bahn 104 durch ein als Darm ausgestaltetes Funktionselement 101. Hier - wie im folgenden - sind entsprechende Elemente mit entsprechenden Bezugszeichen versehen. Dargestellt sind weiterhin ein Schienensystem 102 sowie versorgende Blutgefäße 103. Die Bahn besteht aus einzelnen ferngesteuerten Wagen für jeweils zwei Personen. Durch die Fahrt durch die einzelnen Organe, hier dargestellt anhand eines Funktionselementes 101 in Form des Darmes, wird dem Betrachter das Gefühl für die Zusammenhänge und Stofftransporte, beispielsweise von Speisen innerhalb des menschlichen Systems vermittelt.

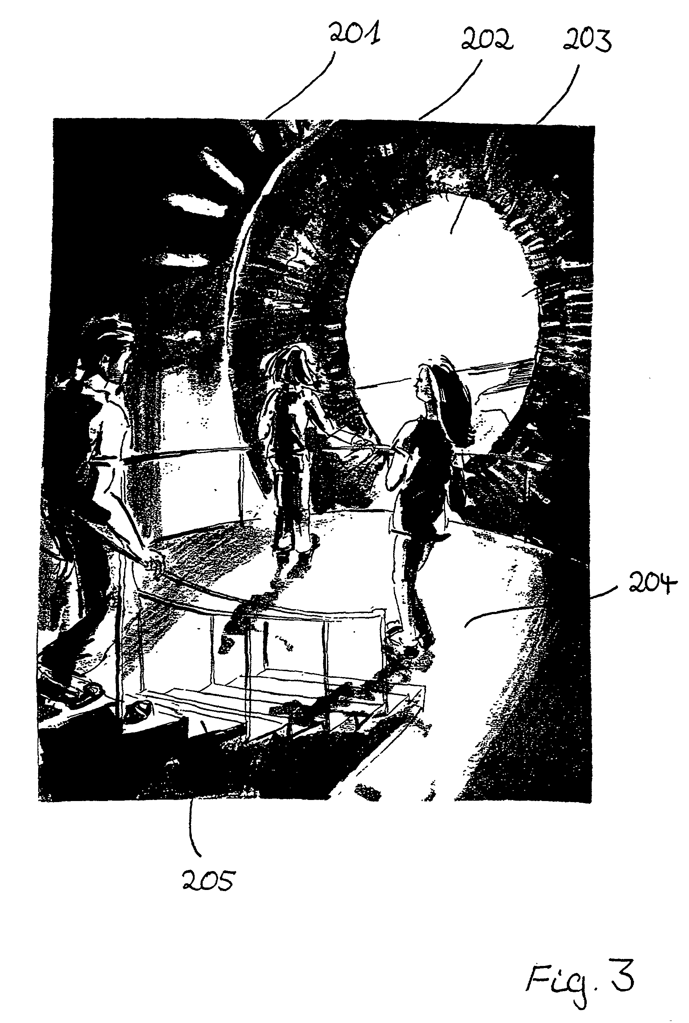

Figur 3 stellt ein als Auge ausgstaltetes Funktionselement 201 mit einer Iris 202 und einer Pupille 203 dar. In dem Auge ist ein begehbares Wegesystem 205 mit einer Plattform 204 angeordnet, so daß der Betrachter aus dem Auge 201 eine Aussicht auf die die Demonstrationseinrichtung umgebende Landschaft hat.

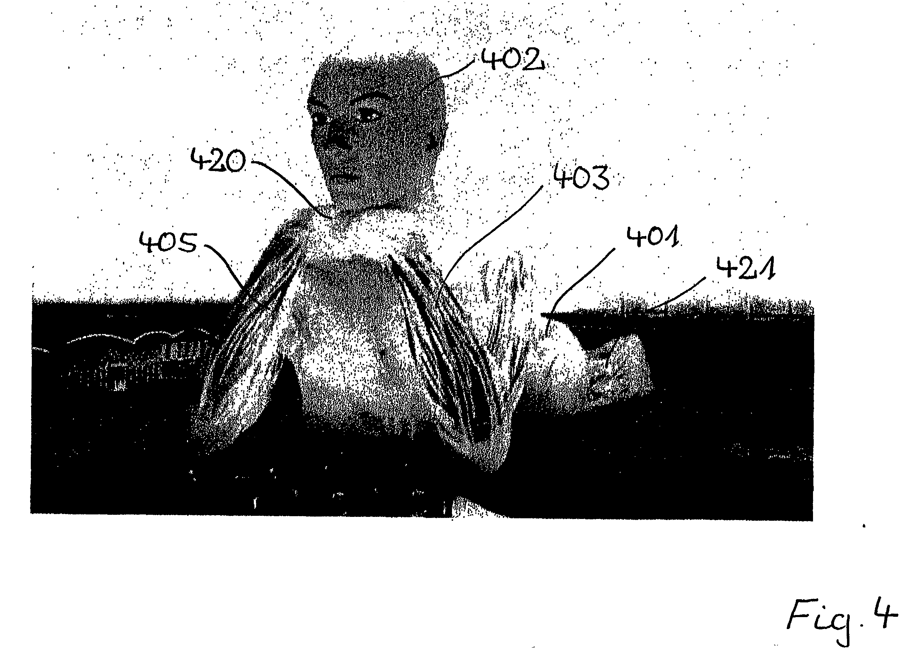

Figur 4 stellt eine weitere erfindungsgemäße Demonstrationseinrichtung in Form eines Menschen 401 dar. Diese Demonstrationseinrichtung liegt mit aufgerichtetem Oberkörper auf dem Bauch. Ein Kopf 402 ist auf verschränkten Handrücken 420 aufgelagert, die Unterarme 403 stehen fast senkrecht. Der Mensch 401 weist Beine 421 auf, die leicht gespreizt angeordnet sind und einen Winkel von etwa 20° bilden. Zwischen den Beinen 421 ist in einer Höhe von ca. 7 m oder alternativ dazu 12 m ab Geländeoberkante eine Terrasse vorgesehen. Dadurch entstehen im Bereich der Beine große Flächen, die zu Ausstellungszwecken genutzt werden können und von außen nicht zu erkennen sind. Damit aus der Vogelperspektive immer noch der Eindruck entsteht, der Körper sei naturgetreu nachgebildet worden, wird die Terrassenfläche als begehbares Gründach ausgebildet. Unterhalb des Oberkörpers des Menschen 401 ist ein Vorbau 404 vorgesehen, in dem sich der Eingangsbereich zu der Demonstrationseinrichtung befindet. Dies bietet die Vorteile, daß sehr viel Raum im Brustbereich gewonnen wird und zum anderen eine statische Abstützung der Demonstrationseinrichtung im Brustbereich erfolgt.

Die Außenhülle der Demonstrationseinrichtung ist teilweise transparent gehalten, beispielsweise in einem Bereich 405 der Unterarme. Dort sind innerhalb der Außenhaut mittels Stahlrohren Muskelfasern nachgebildet, so daß für den Betrachter der Eindruck entsteht, unmittelbar auf die subkutanen Muskelbereiche zu blicken.

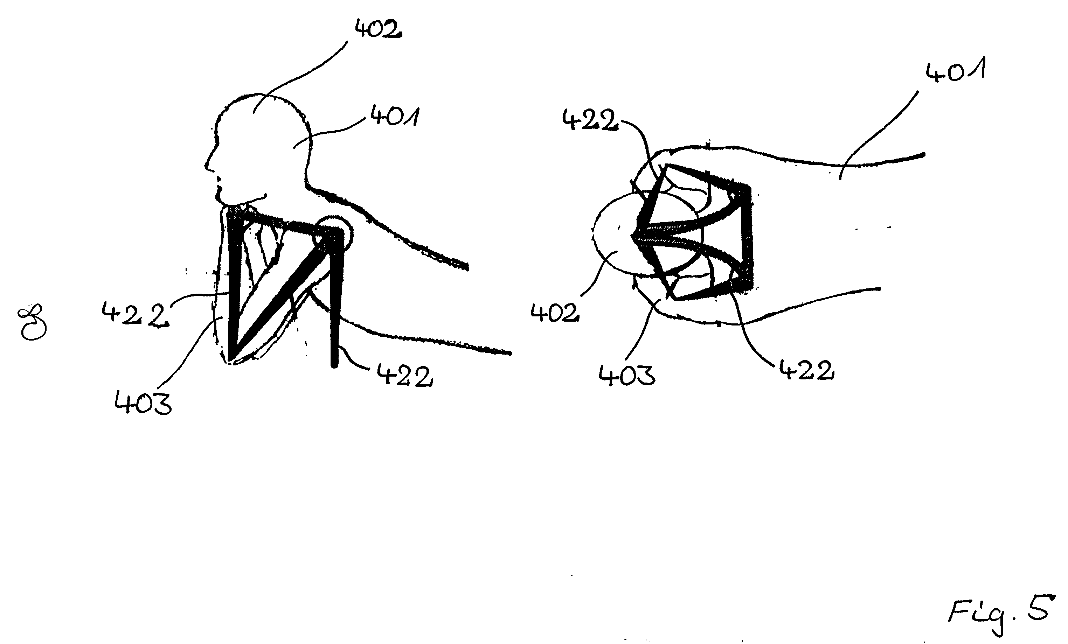

Figur 5 zeigt die statische Abstützung des Brust- und Kopfbereiches der Demonstrationseinrichtung 401. In Figur 5 sind die die Last ableitenden Wege durch dicke Balken 422 eingezeichnet. Der Kopf 401 wird im wesentlichen durch die Unterarme 403 gestützt, wobei diese durch ihre trapezförmige Anordnung die entsprechenden Lasten vollständig aufnehmen und ableiten. Der Brustbereich wird durch den dort befindlichen Unterbau sowie durch die Oberarme der Demonstrationseinrichtung vollständig gestützt.

Für die erfindungsgemäße Demonstrationseinrichtung empfiehlt sich aus brandschutztechnischen Gründen eine Trennung zwischen Gebäudehülle, d.h. Außenhaut, und dem eigentlichen Innenausbau. Wird der Innenausbau als eigenständiges Gebäude mit separaten Fluchtwegen ausgeführt, so kann der Oberkörper als eine eingehauste bzw. überdachte Freifläche deklariert werden. Diese Trennung zwischen Räumlichkeiten für den dauernden Aufenthalt von Menschen und anderen Flächen erlaubt eine geringere Raumtemperatur im Oberkörper und geringere Brandlasten. Ein weiterer Vorteil der Trennung in ein inneres und ein äußeres Bauwerk ist in den sich dadurch ergebenden Variationsmöglichkeiten bei den Bauentwürfen zu sehen.

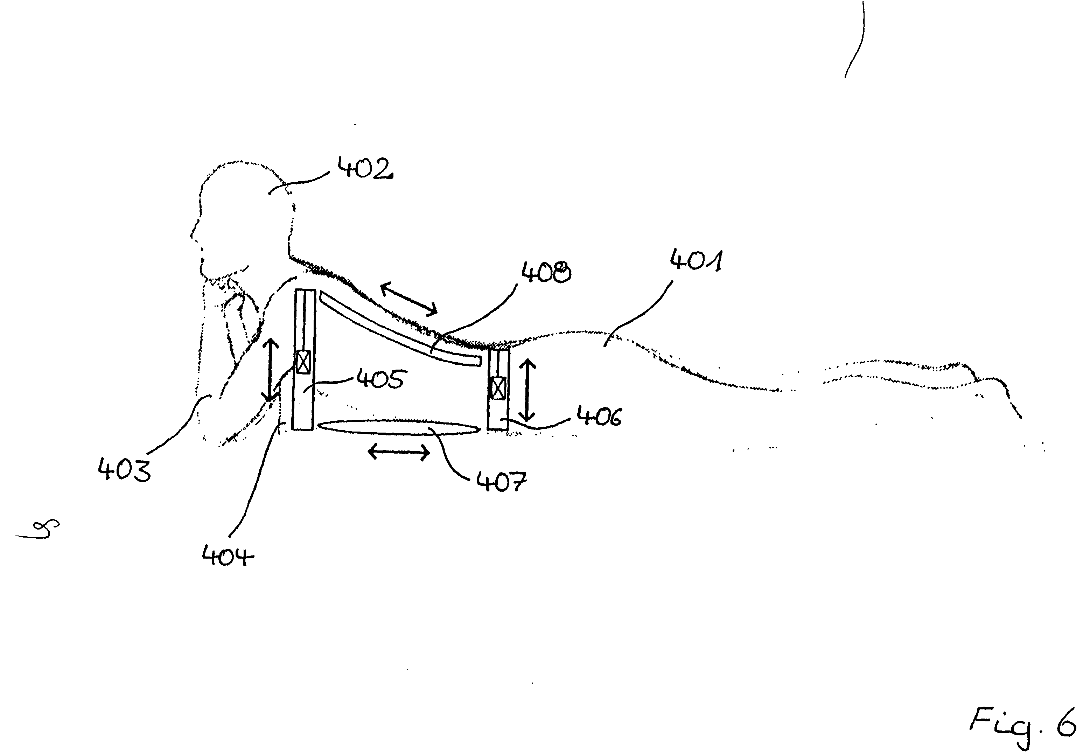

In Figur 4 stehen die beiden Unterarme 403, die den Kopf 402 stützen, auf Ellenbogenfundamenten und sind durch die unter dem Kinn verschränkten Hände 420 miteinander in Querrichtung verbunden, so daß sie eine brückenähnliche Rahmenkonstruktion bilden, auf die der Kopf aufgelagert ist. Wie in Figur 6 gezeigt, befinden sich auf der Querachse der Schultern zwei Treppenhaustürme 405 aus Stahlbeton mit an der Längsseite zum Körperinneren orientierten Glasaufzugskabinen. Die beiden Türme 405 sind durch eine Stahlfachwerkkonstruktion in Schulterebene miteinander verbunden und dienen der zusätzlichen Aussteifung. Der Kopf 402 ist als Mero-Fachwerksystem oder eine gleichwertige Lösung möglichst leicht ausgeführt und mit Aluminiumplatten verkleidet. Eine Thermohaut dient der wärmetechnischen Isolierung und erlaubt es, die Oberfläche des Kopfes naturgetreu zu modellieren.

Die Oberflächen von Hals und Händen, Füßen, Oberschenkeln und im Bereich Hüfte und Gesäß sind möglichst naturalistisch aus Spritzbeton modelliert und anschließend mit einer Thermohaut samt Oberflächenbehandlung versehen. Auch die Ellenbogen werden aus Spritzbeton erstellt. Hier geht es weniger darum, den naturgetreuen Eindruck zu bewahren, als vielmehr um die statische Funktion als Fundament für die Unter- und Oberarme. Bei der Haut der Knie und Waden, wird wie in Figur 4 erkenntlich ist, eine lichtdurchlässige textile Überdachung eingesetzt (PTFE-Membran mit 15% Lichtdurchlässigkeit, Brandklasse A2, k-Wert = 5), die auch am Oberkörper Verwendung finden kann.

Die Form des Oberkörpers wird durch die Rippenbögen vorgegeben, diese werden alternativ als Stahlfachwerkkonstruktion mittels ovaler Rohre, durch Leimholzbinder oder mit Hilfe von jeweils zwei parallelen gebogenen T-Trägern ausgeführt. Zwischen den Trägern werden Glasbänder inklusive Öffnungsflügeln zur Rauch-Wärme-Ableitung angebracht, die einerseits den direkten Einfall natürlichen Lichtes gewährleisten, andererseits aber die Funktion der Rippen als dekoratives Element unterstreichen.

Sowohl an der Schädeldecke als auch an den Fersen können Kuppeln aus Glas angebracht werden. Derartige Kuppeln können auch im Dachbereich der Oberschenkel und innerhalb der Terrassengestaltung verwendet werden und gestatten natürliche Lüftung und natürlichen Lichteinfall.

Der Raum innerhalb der Oberschenkel wird als Stahl/Glaskonstruktion ausgeführt.

Alternativ zu der oben beschriebenen transparenten Lösung kann der gesamte Körper auch als monolithische Schale aus Spritzbeton gefertigt werden. Unter Berücksichtigung der Oberflächenspannung des Betons und Einhaltung der in Figur 5 beschriebenen Stützkonstruktion für den Kopf läßt sich so eine stabile, selbsttragende Halle erstellen. Dabei sind jedoch relativ hohe Gewichtslasten zu berücksichtigen. Die größten Schnittkräfte (Biegemomente um 400 kNm) sind dabei im Bereich des Rückens zu finden und können durch eine konventionelle Bewehrung bzw. mittels einer Vorspannung der Rückenpartien aufgefangen werden.

In diesem Falle ist eine Fertigung des Rumpfes mit konventionellen Gerüsten möglich. Einzelne Körperteile, wie Kopf und Hände, können neben der Baustelle in Spritzbetontechnik sehr dünn hergestellt und mit einem Kran in Position gebracht werden. In einer Stahlbetonausführung ist dann die Konstruktion weitestgehend wartungsfrei und die Oberfläche kann beliebig modelliert werden. Sie kann beispielsweise in Sichtbeton belassen werden oder auch mit Edelstahl silbrig glänzend abgedeckt oder mit einem künstlerischen Anstrich versehen werden. Diese Außenhaut ist im Falle der kompakten Lösung mittels einer selbsttragenden Spritzbetonhalle jederzeit dem modernen Geschmack anpaßbar.

Der Wärmeschutz kann mit der Wahl von Porenbeton oder durch Aufbringen einer Dämmschicht einfach bewerkstelligt werden. Auch zur Verwirklichung eines Brandschutzkonzeptes ist eine Stahlbetonschale eine besonders geeignete Lösung.

Auch die Stahlbetonschale kann für eine natürliche Belüftung und Beleuchtung oder zur Darstellung transparenter Hautbereiche durch Fensteröffnungen und/oder transparente Bauteile durchbrochen werden.

Figur 6 zeigt die Wegeeinrichtungen innerhalb der Demonstrationseinrichtung. Im Bereich der Schultern, ist, wie bereits erläutert, ein Aufzugssystem 405 vorgesehen, um die Besucher in den Brust- und Kopfbereich zu transportieren. Weiterhin ist ein zweites Aufzugssystem 406 im Hüftbereich vorgesehen. Zwischen den im Kopfbereich des Unterbaus 404 angeordneten Eingang und dem zweiten Aufzugssystem 406 erstreckt sich im Unterbau ein begehbares Gebäude 407, in dem beispielsweise Versorgungs- und als Demonstrationseinrichtung ausgestaltete Funktionselemente untergebracht werden können. Am oberen Ende der beiden Aufzugssysteme erfolgt die Verbindung mittels einer begehbaren, als Funktionselement wirkenden Wirbelsäule 408.

Der Innenraum der Demonstrationseinrichtung ist in vier Nutzungszonen untergliedert:
1. Der Unterbau 404, auf dem der Oberkörper aufliegt, schließt die Fläche unterhalb der Terrasse, die zwischen den Beinen angelegt ist, mit ein. In diesem Unterbau, der praktisch wie ein Erdgeschoß genutzt werden kann, sind Versorgungsleitung, Elektroinstallation, Technikräume sowie Werkstätten und dergleichen und außerdem die Fluchtwege untergebracht. Auch der Haupteingang für die Besucher der Demonstrationseinrichtung befindet sich in diesem Gebäude im Unterbau in ca. 2,5 bis 3 m Höhe.
2. Der Oberkörper ist als Hohlkörper konzipiert, um dem Besucher die Weite und Größe der Demonstrationseinrichtung vor Augen führen zu können. Der Haupteingang mündet in diesen Oberkörper.
3. Im Kopf sind Geschosse, Teilgeschosse und Galerien eingebaut, die Ausstellungsflächen und Funktionselemente enthalten.
4. Die vierte Zone umfaßt den Bereich von der Taille bis zu den Füßen und enthält weitere Ausstellungsflächen und Funktionselemente.

Wie bereits beschrieben, wird die Verbindung zwischen dem Kopf und der vierten Zone über die Grundfläche des Oberkörpers in der Eingangsebene und einen Fahrstuhlturm unterhalb der Schultern einerseits sowie über die begehbar gestaltete Wirbelsäule andererseits hergestellt.

Die vorgesehenen als Illustrations- und Interaktionsbereiche ausgestalteten Funktionselemente für die Besucher werden zu folgenden logischen Einheiten zusammengefaßt:
Ernährung und Verdauung
Herz und Kreislauf (mit Blut und lymphatischem System sowie Lungenkreislauf)
Lunge, Atmung und Stimmbildung
Geschlechtsorgane und Fortpflanzung (mit Genetik, Zytologie und Vererbung)
Hormonsystem
Gewebe im Körper (Haut, Knochen und Gelenke, Muskulatur)
Gehirn, Nerven und Reflexe

Eine Ausnahme bilden die Sinne und Sinnesorgane. Zwar könnten auch sie zu einer logischen Gruppe zusammengefaßt werden, es ist jedoch für eine gute räumliche Nutzung der Demonstrationseinrichtung vorteilhaft, drei dieser fünf Sinne übergeordneten Komplexen einzugliedern, beispielsweise Schmecken in den Bereich Ernährung und Verdauung, Riechen in den Bereich Lunge und Atmung sowie Tasten in den Bereich Haut.

Die Sinnesorgane Auge und Ohr werden in eigenständigen Ausstellungsbereichen vorgestellt.

Ergänzt wird das Raumprogramm durch zentrale Einrichtung, wie Sanitärbereiche und Restauration sowie durch spezielle Räumlichkeiten, wie Ruhezonen, kindgerechte Darstellungszonen, ein "gläserner Operationssaal", Seminarräume und dergleichen.

Die beiden logischen Einheiten Ernährung und Verdauung sowie Herz-Lungen-Kreislauf sind nicht nur als reine Ausstellungsflächen konzipiert. Medizinische Hintergründe werden hier auch im Rahmen jeweils einer Erlebnis-Bahnfahrt durch die Gefäße und Organe präsentiert.

In der vierten Zone, von den Füßen bis zur Taille befinden sich die Hauptausstellungsflächen. Hier sind auch die Bahntrassen zur Fahrt durch die als Organe ausgestalteten Funktionselemente untergebracht. Weiterhin befindet sich in dieser Zone ein Restaurant, sanitäre Einrichtungen, Seminarräume, Simulatoren, ein Kinosaal, zentrale Werkstätten und die Verwaltung.

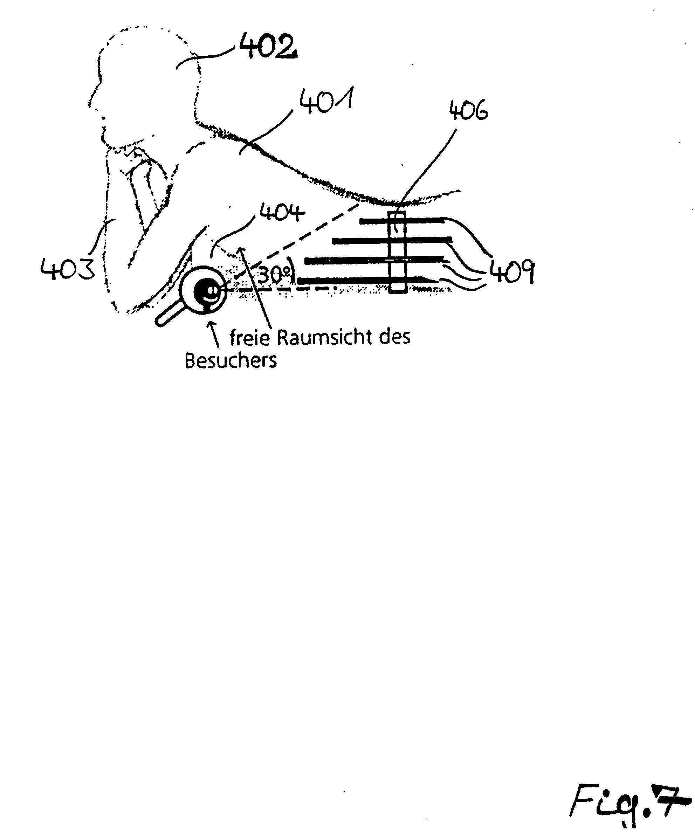

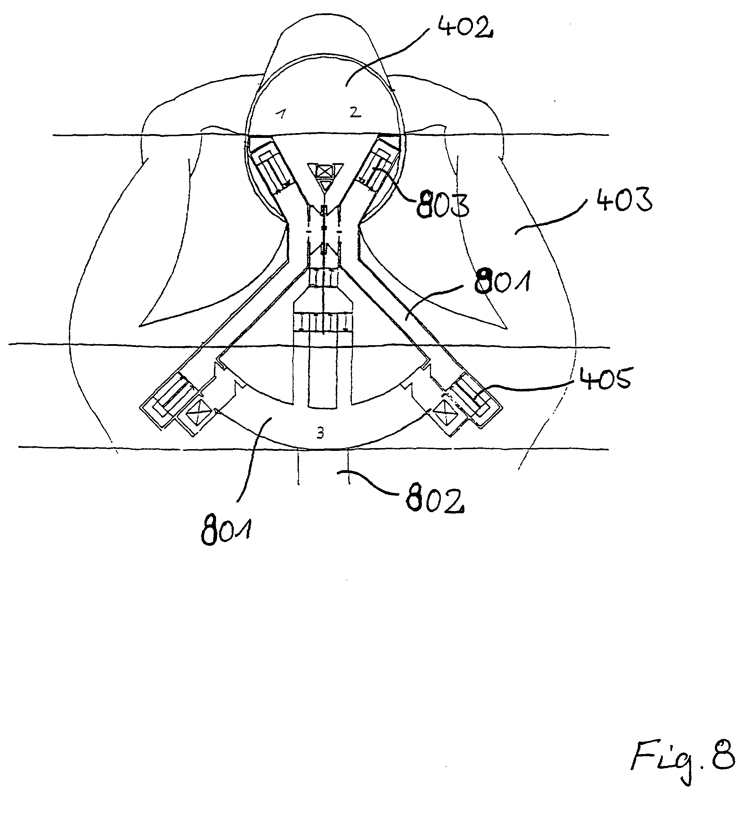

Diese vierte Zone ist in vier dem Publikum zugängliche Etagen unterteilt (Figur 7, Bezugszeichen 409), die über die zwei oben beschriebenen Aufzugstürme im Bereich der Taille miteinander verbunden sind. Über Auskragungen der Geschoßdecken der jeweiligen Ebenen in Querrichtung ist es möglich, bei der Gestaltung der Außenhaut die Verjüngung des liegenden Körpers nachzuempfinden. Über die Auskragungen werden das innere Gebäude und die Außenhaut miteinander verbunden. Durch diese horizontale Anbindung kann in den Bereichen unterhalb des größten Querschnitts ein Wegknicken der kuppelähnlichen Konstruktion der Außenhaut verhindert werden.

Der Bereich des Oberkörpers dient dem Raumerlebnis. Weiterhin sind hier Informationstheken und die oben beschriebenen zentralen Fahrstuhl- und Treppenhauseinheiten untergebracht, die eine Zugangsmöglichkeit zum Kopf darstellen. Im Bereich Oberkörper befindet sich im Unterbau 404 der Haupteingang. Wie in Figur 7 dargestellt ist, kann der Besucher im Eingangsbereich mit einem Blickwinkel von 30° in den freien Brustraum schauen und dessen gewaltige Dimensionen erfassen.

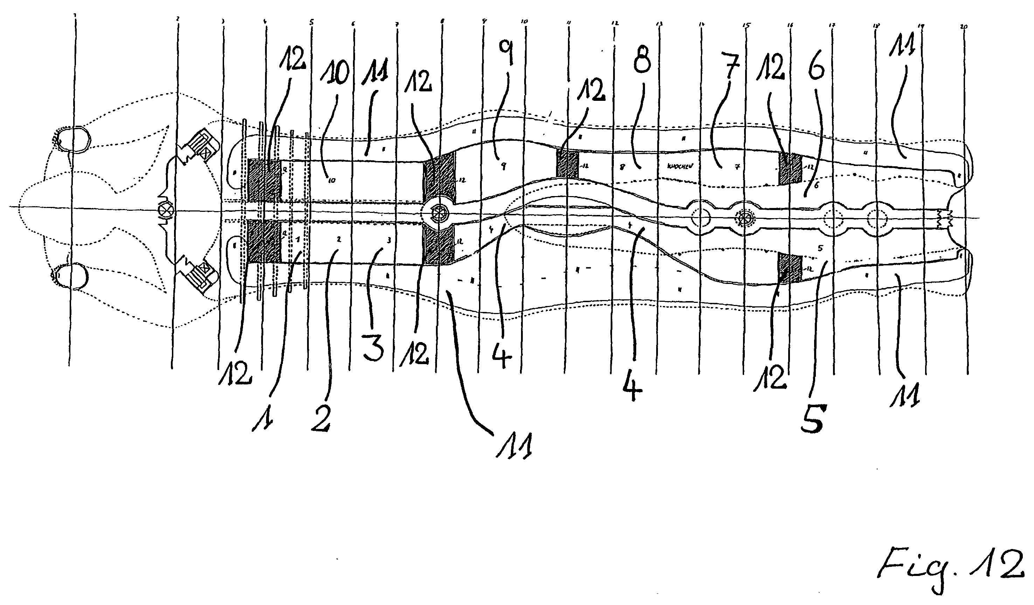

Der Kopf 402 enthält ebenfalls mehrere Geschoßebenen (siehe Fig. 11). In ihm sind ebenfalls die Demonstrationsbereiche untergebracht, beispielsweise für Gehirn, Nerven und Reflexe, Auge und Ohr.

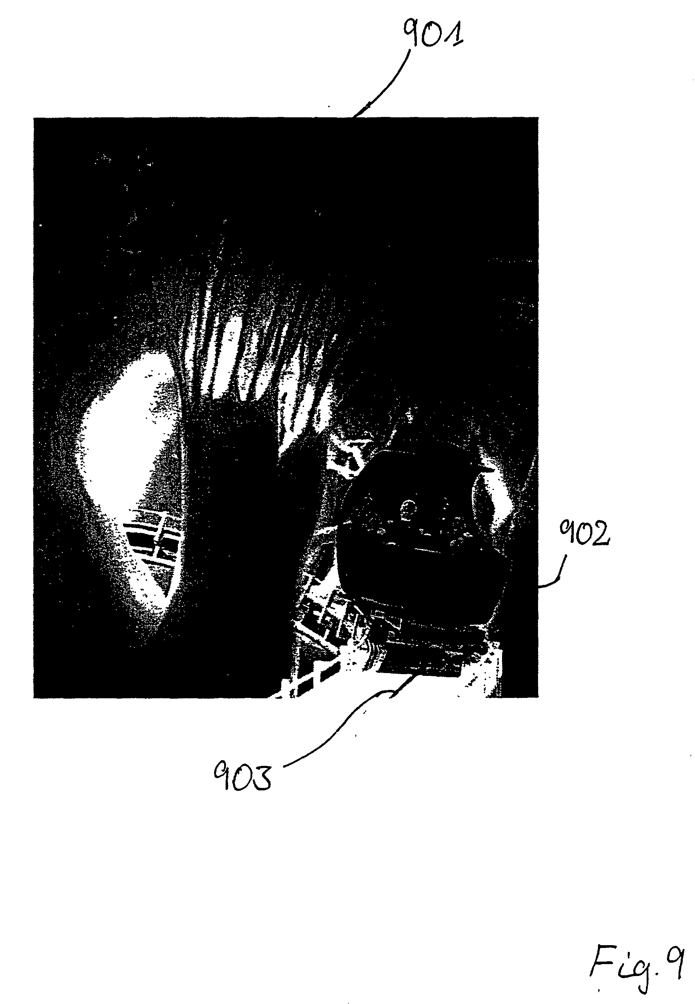

Figur 8 zeigt den Grundriß der ersten Ebene des Kopfbereiches. Diese bietet Platz für sanitäre Einrichtung und eine Café. Der Kopfbereich wird über die im Brustbereich angeordneten Fahrstuhlschächte 405 erschlossen. Zwischen dem Kopfbereich und diesen Fahrstuhlschächten 405 befinden sich Übergänge 801 sowie innerhalb des Kopfbereiches zur Erschließung der einzelnen Ebenen im Kopf 402 Treppenhäuser 803. Weiterhin ist die begehbare Wirbelsäule 802 zur Verbindung des Kopfbereiches mit der vierten Zone zu erkennen.

Die Übergänge 801 vom Kopf zu den Schulter, welche in Längsrichtung die Stahlbetontürme als Fluchtwege erschließen, sind konstruktiv als Stahlfachwerke ausgebildet und mit einer Brandschutzverkleidung versehen.

Die verschiedenen Ebenen in den verschiedenen Zonen der Demonstrationseinrichtung dienen der Vorstellung unterschiedlicher Themenkomplexe, die vornehmlich zu Fuß erkundet werden.

Bei diesem Ausführungsbeispiel ist bewußt darauf verzichtet worden, alle Organe entsprechend ihrer Lage im Körper zu plazieren. Dennoch kann sich der Besucher durch zwei wichtige Organsysteme des menschlichen Körpers per Bahn transportieren lassen. Hierzu sind in der vierten Zone zwischen Taille und Füßen zwei Bahnschleifen installiert. Die erste befindet sich im Eingangsgeschoß und beinhaltet den Verdauungstrakt mit Speiseröhre, Magen, Darm, Leber und Niere auf einer Länge von ca. 400 m. Die zweite Bahntrasse ist dem Thema Herz-Kreislauf-Lunge gewidmet und befindet sich im ersten Obergeschoß. Sie hat eine Gesamtlänge von ca. 180 m.

Bei den Bahnen handelt es sich um ein führerloses Transportsystem aus einzelnen, zentral angesteuerten Wagen, die Platz für drei bis sechs Personen bieten.

Um den Eindruck einer Fahrt durch den Körper möglichst authentisch erzeugen zu können, befindet sich im Blickfeld des Betrachters nur ein unverzichtbares Minimum an körperfremden Details. Daher ist der Fahrtweg jeder Bahn als abgeschlossene Tunnelröhre konzipiert, die man lediglich über den Ein- und Ausstiegsbereich betreten kann.

Die Bahn wird durch eine bodennahe Führung geleitet, da diese weniger störende optische Effekte als eine deckennahe Führung auf die Benutzer besitzt. Diese Führung kann schienengebunden oder schienenlos ausgeführt werden, wobei ein standortbezogenes Geschwindigkeitsprofil, dem die Einzelkabinen der Bahn der Fahrt folgen müssen, festgelegt ist.

Die Wagen werden mit einem Abstand von ca. 12 m fahren, so daß sich eine Anzahl von 33 Kabinen auf der Verdauungstraktschleife bzw. 15 Kabinen auf der Herz-Kreislauf-Lunge-Schleife ergeben. Bei im Schnitt 5 Fahrgästen pro Einzelkabine und einer mittleren Geschwindigkeit und 0,5 m/s können so stündlich ca. 1.300 Fahrgäste transportiert werden.

Im Inneren der Demonstrationseinrichtung befinden sich weiterhin als Ausstellungsbereiche ausgestaltete Funktionselemente, die über einen Fußweg erschlossen sind. Die Haupterschließungsachse verläuft dabei in Längsrichtung in der Gebäudemitte. Der achsensymmetrische Aufbau des Gebäudes erleichtert einerseits die Orientierung für den Besucher, ermöglicht aber anderseits auch ein Höchstmaß an Flexibilität bei der Raumnutzung.

Insbesondere im Bereich der vierten Zone zwischen Taille und Füßen besteht für den Besucher fast immer die Möglichkeit eines freien Blickes nach oben. Der Flur wird über Lichtschächte mit natürlichem Licht versorgt und so ein ansprechendes Ambiente geschaffen. Die Räume, in denen die Medizin und die Technik für die Besucher zu Fuß ausgestellt werden, sind dem jeweiligen Thema entsprechend gestaltet. Die Verbindungswege zwischen diesen Räumen sind neutral gehalten, um eine Reizüberflutung des Besuchers zu vermeiden. Diesem Zweck dienen auch die vorgenannten Ruhezonen. Diese wechseln innerhalb der Architektur mit den eigentlichen Ausstellungsflächen ab, um dem Betrachter immer wieder Gelegenheit zu einer Verschnaufpause zu geben. An zwei Stellen sind Restaurationsbetriebe vorgesehen, ein Cafe im Kopfbereich, von dem aus sich ein Blick über die Umgebung in knapp 50 m Höhe bietet und ein Restaurant im dritten Obergeschoß der vierten Zone.

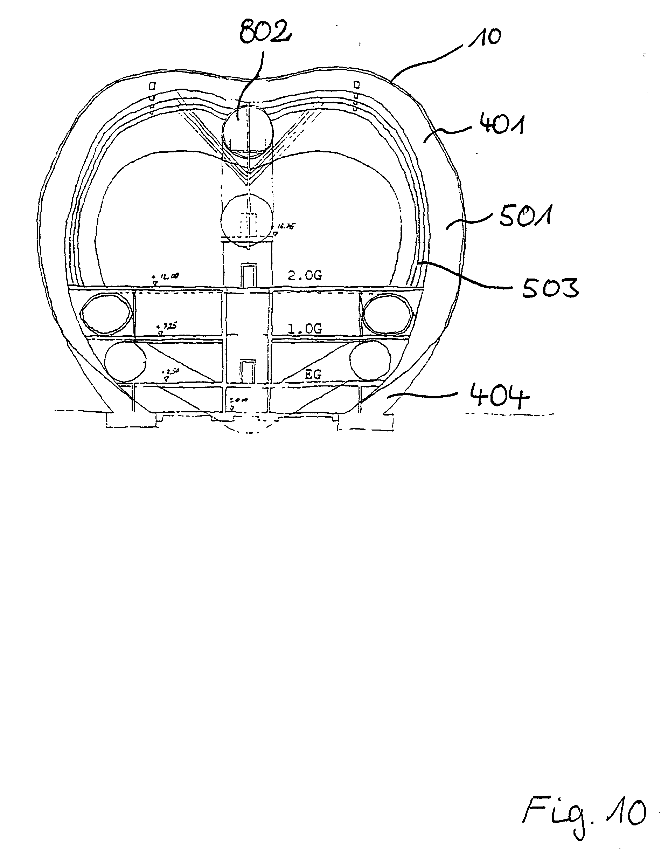

Am Beispiel des Herzens in Verbindung mit Figur 9 soll eine beispielhafte architektonische Organgestaltung erläutert werden. Das Innere der Organe ist kulissenartig nachgebildet, um den Besucher bei Hohlorganen den lebendigen Eindruck zu vermitteln, er würde das jeweilige Organ durchwandern.

Im Falle der Hohlorgane, wie beispielsweise dem Herzen, dient die Dekoration des Funktionselementes dem Zweck, dem Betrachter das Gefühl zu geben, er befände sich im Inneren dieses Organs. So ist beispielsweise in Figur 9 eine Herzkammer eines Herzens 901 gezeigt, das mittels einer schienengebundenen Bahn 902, 903 durchfahren wird. Die Bahn besteht aus Einzelkabinen für 3 bis 6 Insassen. Für den Benutzer der Bahn ergibt sich hier der realistische Eindruck, durch eine Herzkammer zu fahren.

Bei allen anderen als Funktionselemente dienenden Ausstellungsbereichen stimmen die Wandstrukturen auf das gebotene Thema ein, beispielsweise zeigen die Wände im Themenbereich Gehirn, Nerven und Reflexe Strukturen von Nervenzellgewebe.

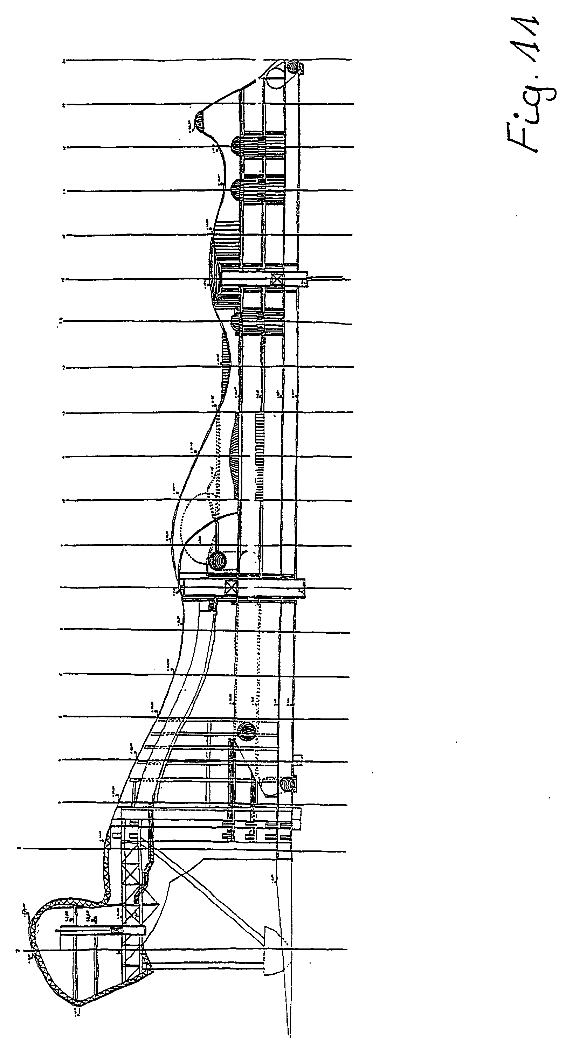

Figur 10 zeigt einen Querschnitt durch den Oberkörper der Demonstrationseinrichtung 401. Dieser stützt sich auf den Unterbau 404. Weiterhin sind die einzelnen Ebenen des Unterbaus im Brustbereich zu erkennen. Oberhalb des dreigeschossigen Innenausbaus ist im Rückenbereich die begehbare Wirbelsäule 802 angeordnet.

Unmittelbar ist zu erkennen, daß die Außenhaut 10 und der Innenausbau 503 selbständige voneinander getrennte Gebäude bilden.

Figur 11 zeigt einen weiteren vertikalen Querschnitt in Längsrichtung durch die Demonstrationseinrichtung. Gut zu erkennen ist die geschoßweise Inneneinteilung des Kopfbereiches, des Unterbaus sowie der vierten Zone zwischen Taille und Füßen. Weiterhin ist die Abstützung des Kopf- und Brustbereiches durch die als Arme ausgebildeten Stützelemente dargestellt.

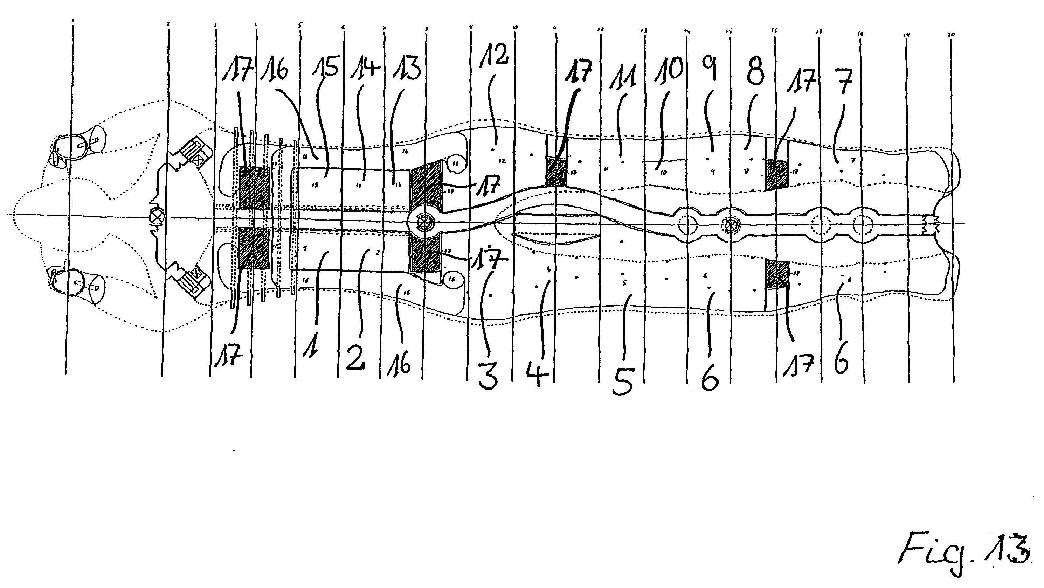

Figur 12 stellt den Grundriß des Erdgeschosses im Bereich zwischen Taille und Füßen der Demonstrationseinrichtung dar. Abweichend von den bisherigen Bezugszeichen bezeichnen hier die Bezugszeichen
1 den Bereich Ernährung
2 Mundhöhle und Zähne
3 Magen
4 Darm
5 Leber
6 Niere
7 Ruhezone und Sinne
8 Ruhezone und Sinne und einen Verkaufsstand
9 einen Bereich für Kinder
10 den Bereich Schmecken an einer dort angeordneten Minibar,
11 bezeichnet die im Erdgeschoß installierte Bahn, und
12 bezeichnet Einzeltreppenhaus.

Die erste Bahnschleife 11 im Erdgeschoß beginnt mit der Durchfahrung der Speiseröhre und führt dann in den Magen 3. Die Außenhülle des Magens 3, der mit Verdauungssäften und Nahrungsbestandteilen gefüllt ist, ist zur Simulation der peristaltischen Bewegung beweglich gestaltet. Weiterhin sind an der realistisch dargestellten Magen-Schleimhaut bekannte Krankheitsbilder wie Magengeschwüre dargestellt. Die Fahrt geht vom Magen weiter durch den Zwölffingerdarm in den Dünndarm 4. Der Fahrgast passiert dabei die Einflußöffnung der Bauchspeicheldrüse sowie des Gallenganges. Im Dünndarm 4 ist ein Zoomeffekt vorgesehen, in dem im Verlaufe der Fahrt die Zotten immer detaillierter und größer werden, so daß der Eindruck entsteht, daß man sich der Darmwand mehr und mehr nähert. Der Darm 4 selbst hat eine Bahn-Gesamtlänge von ca. 150 m.

Zwischen Darm und Blutbahn findet ein Übergang der Bahn 11 statt, indem sich die Strukturen der Röhrenwand des Darmes 4 zu denen eines Blutgefäßes wandeln. Im weiteren Verlauf der Fahrt werden dann Leber- und Nierengewebe 5 bzw. 6 dargestellt. Hier wird der zu sehende Ausschnitt weiter vergrößert, so daß schließlich die Struktur der funktionellen Einheit der Leber 5 bzw. der Niere 6 sichtbar sind. Die erste Bahnschleife endet nach Durchfahrt der Niere 6.

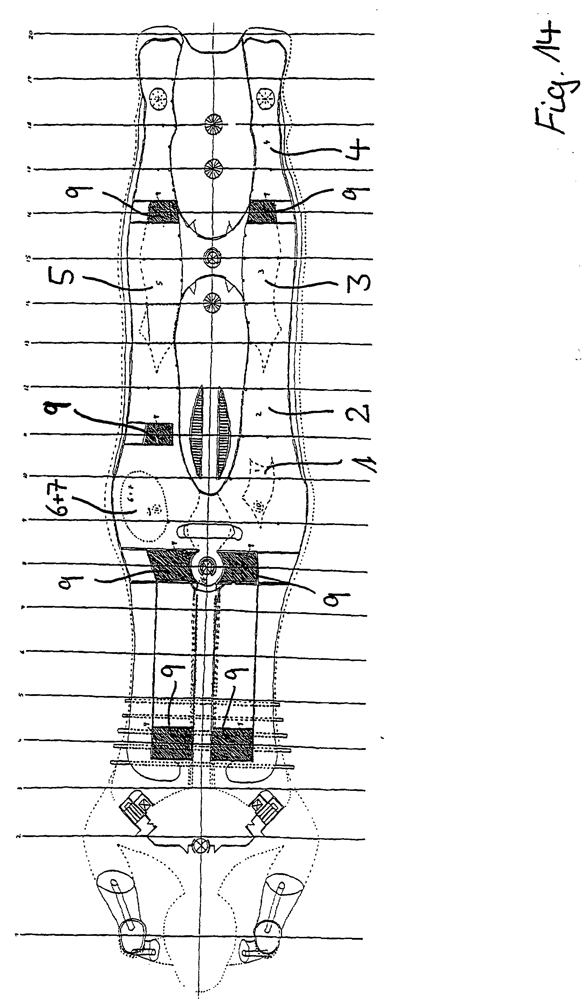

Figur 13 stellt einen Querschnitt des ersten Obergeschosses im Bereich zwischen Taille und Füßen dar. Die Bezugszeichen bezeichnen, abweichend von der bisherigen Verwendung folgende Bereiche:
1 Kreislauf
2 Herz
3 Luftröhre und Stimme
4 Nase und Riechen
5 Kinder
6 Verwaltungsbereich
7 Seminarräume
8 Café/Bistro
9 Shop
10 Knochen
11 Ruhezone
12 Lunge
13 Blut
14 Lymphe
15 Abwehrsystem
16 eine im ersten Obergeschoß installierte Bahn sowie
17 ein Treppenhaus

Die im zweiten Obergeschoß installierte Bahn 16 fährt beginnend mit einem Blutgefäß, das als eine Röhre ausgebildet ist, in den rechten Vorhof des Herzens 2. Durch die Herzklappe gelangt die Bahn 16 dann in die rechte Herzkammer, wie beispielsweise in Figur 9 dargestellt. Dabei werden die Klappenfunktion und die Kontraktion der Herzmuskulatur simuliert. Durch eine weitere Herzklappe und ein Blutgefäß führt der Weg in die Lunge 12. Der Querschnitt des Gefäßes wird immer enger, so daß der Eindruck erzeugt wird, das Gefäß würde sich immer weiter verzweigen. Im Bereich der Lunge 12 sind die Lungenbläschen durch zunehmende Transparenz der Gefäßwände sichtbar. Schließlich tritt die Bahn 16 vom Blutweg in den Luftweg über, so daß die Fahrt durch die Bronchien und die Luftröhre 3 zum Ausstiegsbahnhof führt.

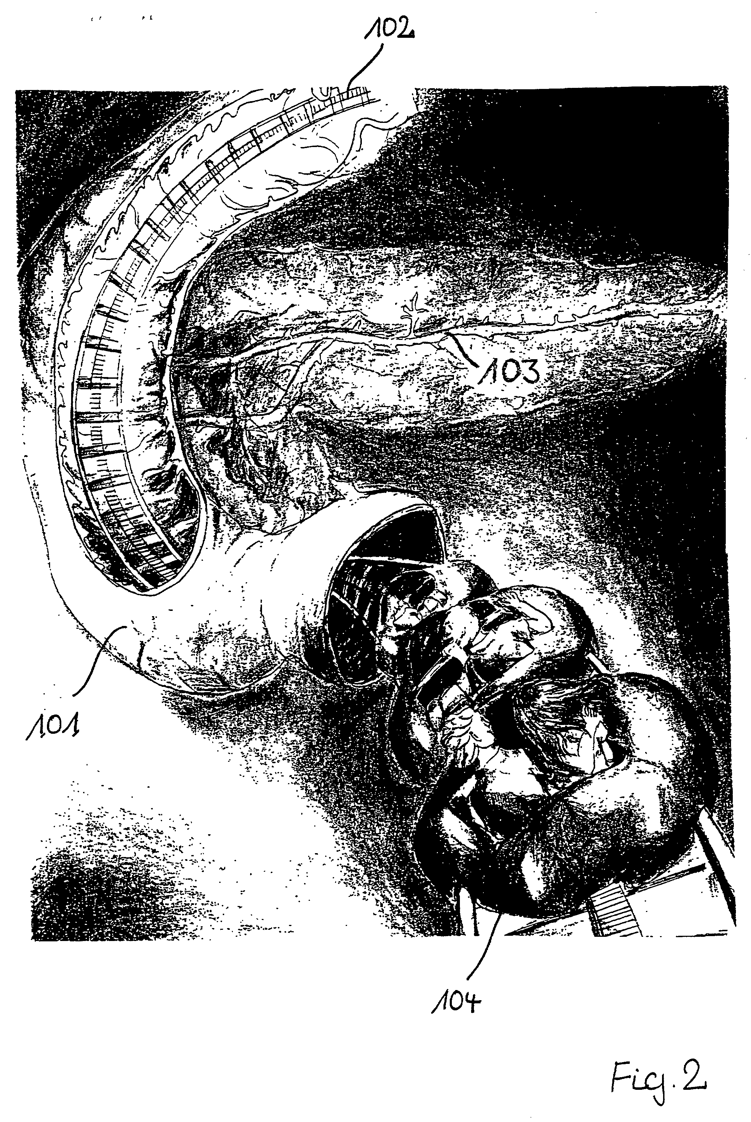

Figur 14 zeigt einen Querschnitt durch das zweite Obergeschoß im Bereich zwischen Taille und Füßen. Es bezeichnen die Bezugszeichen, abweichend von der bisherigen Verwendung, folgende Bereiche:
1 ein Restaurant und Simulatoren
2 Hormone
3 Haut
4 Gewebe
5 Knochen, Muskulatur und Gelenke
6 Geschlechtsorgane und Fortpflanzung
7 Genetik Zytologie und Vererbung
9 ein Treppenhaus

Die Ausstellungsräume, die in den Figuren 9 bis 14 dargestellt sind und die nicht von einer Bahn durchfahren werden, sind für die Besucher zu Fuß zugänglich. In ihnen werden anatomische Modelle präsentiert, die dem Besucher die Möglichkeit bieten, den Aufbau und die Funktion des Körpers bzw. der Organe in ihrer Gesamtheit zu erfassen.

Dadurch, daß die Demonstrationseinrichtung sowohl befahrbar als auch begehbar ist, kann der Besucher zuerst über eine mit interessanten Effekten verbundene Bahnfahrt in die Strukturen und Funktionen der als Organe ausgestalteten Funktionselemente eingeführt werden, bevor er sich anschließend, möglicherweise seiner Neigung und seinen Interessen entsprechend, detailliert und/oder selektiv den als Ausstellungsräume ausgestalteten Funktionselementen zu Fuß zuwendet, um dort genauere Informationen zu erhalten. Diese als Ausstellungsräume ausgeführten Funktionselemente können beispielsweise Torsomodelle, die die Lage der Organe im Körper und die Größeproportionen der Organe zueinander erkennen lassen, oder Funktionsmodelle, an denen beispielsweise wie beim Auge Kurzsichtigkeit, Weitsichtigkeit und die Korrektur durch Brillengläser erläutert werden kann, enthalten. Auch Modelle, die die Krankheiten erklären, sind dort aufgestellt. So erklärt beispielsweise das Bluthochdruckmodell die Auswirkung des Bluthochdrucks auf die betroffenen Organe.

In den Ausstellungsräumen können Themen aus dem Bereich der Technik, insbesondere die Themen der Medizintechnik durch Ausstellung medizintechnischer Anlagen und Geräte, dem Besucher besonders nahegebracht werden. Dies ist beispielsweise im Bereich der Blinddarm- und Bypassoperation in einem gläsernen Operationssaal, für die Diagnosetechnik durch Darstellung beispielsweise der Ultraschallsonographie, für die Prothetik durch die Vorführung computergesteuerter Prothesen an einem Dummy bzw. anhand eines Skelettes mit Implantaten, für die organbezogene Medizintechnik durch die Darstellung einer Herz-Lungen-Maschine oder eines Dialysegerätes, bzw. durch medizintechnische Anwendung, die vom Besucher selbst durchgeführt werden können, wie beispielsweise Spirometer und Audiometer, möglich.

In der Demonstrationseinrichtung sollen weiterhin als besonderes Konzept Analogien zwischen den im menschlichen Körper ablaufenden Prozessen und technischen Verfahren aufgezeigt werden. Dies führt zu einer besonders anschaulichen und übersichtlichen Beschreibung biologischer Prozesse.

Derartige Vergleiche können beispielsweise der Vergleich des Kauens mit einem Backenbrecher, der Verdauung mit einer Vergärungsanlage für die Biomüllvergärung, der Herstellung chemischer Stoffe mit den Syntheseleistungen der Leber, der Vergleich grenzflächenaktiver Substanzen mit der Galle, der Bildung von Gallensteinen mit den chemischen Prozessen der Kristallisation, Keimbildung und Kristallwachstum, der Lunge mit Aktivkoksreaktoren auf Basis kohlenstoffhaltiger Adsorbentien zur Rauchgasreinigung, des Blutkreislaufs und Herzens mit beispielsweise Membranpumpen, Rohrleitungen, Bypassleitungen, Windkesseln, Schlauchpumpen, Rückschlagklappen und/oder Drosselarmaturen sowie der Niere mit der Membrantrenntechnik, der Haut und Knochen mit Verbundwerkstoffen aus glasfaserverstärkten Kunststoffen, des Bewegungsapparates mit hydraulischen Anlagen, der Gehirnstruktur und des Nervensystems mit neuronalen Netzen, des Auges mit dem Photoapparat, des Ohres mit dem piezoelektrischen Effekt sowie von biologischen Regelprozessen mit Regelprozessen in verfahrenstechnischen Anlagen, beispielsweise Anlagen zur Konstanthaltung von Temperaturen mittels Wärmetauschern, verglichen werden.

Weitere Funktionselemente können Kinos enthalten, in denen Vorführungen biologischer Prozesse, beispielsweise der Entstehung menschlichen Lebens, stattfinden. Mit Hilfe spezieller Projektionstechniken, die auf die gewölbte Decke eines Vorführraumes abgestimmt sind, läßt sich der Eindruck vermitteln, sich mitten in der Handlung zu befinden.

Weiterhin können Simulatoren, beispielsweise Simulationstheater oder Kapselsimulatoren, vorgesehen sein, um beispielsweise Fahrten durch den Verdauungstrakt oder die Blutbahn, oder auch eine Virenjagd oder den Weg eines Nervenimpulses durch die Nervenbahn in realistischer und beeindruckender Weise darzustellen.

Insgesamt ist es durch die Befahr- und Begehbarkeit der erfindungsgemäßen Demonstrationseinrichtung möglich, daß jeder Besucher seinen Neigungen und Interessen entsprechend auf beeindruckende Art und Weise mit dem Wissen über die inneren Zusammenhänge, Anordnungen und Funktionen eines Lebewesens informiert wird.

## Patentansprüche

1. Demonstrationseinrichtung (401) in Form eines Lebewesens in mindestens 50-facher Vergrößerung mit einer einen Hohlraum umgebenden Außenhaut (10), die der Form des Lebewesens nachgebildet ist und mit Funktionselementen (11), die den Organen, Gefäßsystemen und/oder Gelenken usw. des dargestellten Lebewesens nachgebildet und im Hohlraum angeordnet sind, wobei die Demonstrationseinrichtung (401) mit ihren Funktionselementen (11) mit körperfunktionsspezifischen Wegesystemen (12) sowohl befahrbar als auch begehbar erschlossen sind,
dadurch gekennzeichnet, daß
die Außenhaut (10) zumindest teilweise durchsichtig ist.

2. Demonstrationseinrichtung nach Anspruch 1, dadurch gekennzeichnet, daß sie eine 80- bis 120-fache Vergrößerung aufweist.

3. Demonstrationseinrichtung nach Anspruch 1 oder 2, dadurch gekennzeichnet, daß die Außenhaut (10) durch Stützelemente getragen wird.

4. Demonstrationseinrichtung nach dem vorhergehenden Anspruch, dadurch gekennzeichnet, daß die Außenhaut zumindest teilweise eine transparente Membran ist.

5. Demonstrationseinrichtung nach einem der vorhergehenden Ansprüche, dadurch gekennzeichnet, daß unter den durchsichtigen Bereichen der Außenhaut Funktionselemente angeordnet sind, die die Anatomie des an der jeweiligen Stelle im Lebewesen entsprechend unter der Außenhaut liegenden Bereichs darstellen.

6. Demonstrationseinrichtung nach einem der vorhergehenden Ansprüche, dadurch gekennzeichnet, daß die Außenhaut als monolithische Schale ausgebildet ist.

7. Demonstrationseinrichtung nach einem der vorhergehenden Ansprüche, dadurch gekennzeichnet, daß die Außenhaut als selbsttragende Halle ausgebildet ist.

8. Demonstrationseinrichtung nach einem der vorhergehenden Ansprüche, dadurch gekennzeichnet, daß die Funktionselemente innerhalb der Außenhaut unabhängig von ihrer anatomisch entsprechenden Lage mit optimaler Nutzung des Innenraumes der Demonstrationseinrichtung angeordnet sind.

9. Demonstrationseinrichtung nach einem der vorhergehenden Ansprüche, dadurch gekennzeichnet, daß die Funktionselemente zumindest teilweise begehbar, befahrbar und/oder interaktiv ausgebildet sind.

10. Demonstrationseinrichtung nach einem der vorhergehenden Ansprüche, dadurch gekennzeichnet, daß das befahrbare-Wegesystem ein Schienensystem oder ein schienenloses Wegesystem aufweist.

11. Demonstrationseinrichtung nach Anspruch 10, dadurch gekennzeichnet, daß der Fahrweg in Röhren verläuft.

12. Demonstrationseinrichtung nach Anspruch 10, dadurch gekennzeichnet, daß der Fahrweg in abgeschlossenen Röhren verläuft.

13. Demonstrationseinrichtung nach einem der Ansprüche 10 bis 12, dadurch gekennzeichnet, daß das Bahnsystem ein führerloses Kabinensystem mit einzelnen zentral angesteuerten Wagen ist.

14. Demonstrationseinrichtung nach einem der vorhergehenden Ansprüche, dadurch gekennzeichnet, daß sie der Form eines Menschen nachgebildet ist.

15. Demonstrationseinrichtung nach Anspruch 14, dadurch gekennzeichnet, daß der Mensch unbekleidet und/oder androgyn ist.

16. Demonstrationseinrichtung nach Anspruch 14 oder 15, dadurch gekennzeichnet, daß der Mensch auf dem Bauch liegt.

17. Demonstrationseinrichtung nach Anspruch 16, dadurch gekennzeichnet, daß der Mensch mit erhobenem Kopf auf dem Bauch liegt.

18. Demonstrationseinrichtung nach einem der Ansprüche 14 bis 17, dadurch gekennzeichnet, daß die Arme in den Kopf der Demonstrationseinrichtung stützender Weise angeordnet sind.

19. Demonstrationseinrichtung nach einem der Ansprüche 14 bis 18, dadurch gekennzeichnet, daß der Oberkörper durch einen zwischen diesem und der Auflagefläche der Demonstrationseinrichtung angeordneten Unterbau gestützt ist.

20. Demonstrationseinrichtung nach Anspruch 16, dadurch gekennzeichnet, daß der Rückenbereich vorgespannt ist.

21. Demonstrationseinrichtung nach einem der Ansprüche 14 bis 20, dadurch gekennzeichnet, daß Herz, Leber, Magen, Niere, Galle, Gefäßsysteme, Nervensystem, Gehirn, Speiseröhre, Verdauungstrakt, Fortpflanzungsorgane, Klein- und Großgelenke sowie die Sinnesorgane als Funktionselemente nachgebildet sind.

22. Demonstrationseinrichtung nach einem der Ansprüche 14 bis 21, dadurch gekennzeichnet, daß sie in drei Nutzungszonen, vorzugsweise Oberkörper, Kopf und den Bereich zwischen Taille und Füßen, sowie gegebenenfalls eine weitere Nutzungszone im Unterbau unterteilt ist.

23. Demonstrationseinrichtung nach Anspruch 22, dadurch gekennzeichnet, daß der Oberkörper als weitgehend freier Raum ausgebildet ist.

24. Demonstrationseinrichtung nach Anspruch 22 oder 23, dadurch gekennzeichnet, daß der Oberkörper nur die Zugangswege zu der Kopfzone sowie der Zone zwischen Taille und Füßen wie Treppenhäuser und Fahrstuhlschächte und dergleichen enthält.

25. Demonstrationseinrichtung nach einem der Ansprüche 22 bis 24, dadurch gekennzeichnet, daß der Unterbau die Versorgungstechnik wie Versorgungsleitungen, Elektroinstallationen, Technikräume, Werkstätten und dergleichen enthält.

26. Demonstrationseinrichtung nach einem der Ansprüche 22 bis 25, dadurch gekennzeichnet, daß die Kopfzone und die Zone zwischen Taille und Füßen über eine begehbar ausgestaltete Wirbelsäule verbunden sind.

27. Demonstrationseinrichtung nach einem der Ansprüche 22 bis 26, dadurch gekennzeichnet, daß in der Zone zwischen Taille und Füßen die Funktionselemente angeordnet sind, die den anatomisch im Rumpf und in den Beinen angeordneten Organen, Gefäßsystemen etc. entsprechen.

28. Demonstrationseinrichtung nach einem der Ansprüche 22 bis 27, dadurch gekennzeichnet, daß die in der Zone zwischen Taille und Füßen angeordneten Funktionselemente zumindest teilweise begehbar und zumindest teilweise befahrbar sind.

29. Demonstrationseinrichtung nach einem der Ansprüche 22 bis 28, dadurch gekennzeichnet, daß in der Zone zwischen Taille und Füßen zwei Bahnsysteme angeordnet sind, die durch dem Verdauungstrakt und den inneren Organen entsprechende Funktionselemente bzw. durch dem Herz-Kreislauf-Lunge-System entsprechende Funktionselemente führen.

30. Demonstrationseinrichtung nach einem der Ansprüche 14 bis 29, dadurch gekennzeichnet, daß die Hohlorganen entsprechenden, begehbaren und/oder befahrbaren Funktionselemente so ausgebildet sind, daß sie beim Begehen und/oder Befahren den Eindruck vermitteln, sich in den Organen, Gefäßsystemen etc. zu befinden.

31. Demonstrationseinrichtung nach einem der Ansprüche 14 bis 29, dadurch gekennzeichnet, daß die nicht Hohlorganen entsprechenden begehbaren und/oder befahrbaren Funktionselemente den Aufbau des jeweiligen Organs, Gefäßsystems etc. demonstrieren.

32. Demonstrationseinrichtung nach einem der vorhergehenden Ansprüche, dadurch gekennzeichnet, daß in den Funktionselementen Vorrichtungen angeordnet sind, die technische Analoga zu den in den durch die Funktionselemente dargestellten jeweiligen Organen, Gefäßsystemen etc. stattfindenden biologischen Anordnungen und/oder Prozessen demonstrieren.

33. Demonstrationseinrichtung nach einem der vorhergehenden Ansprüche, dadurch gekennzeichnet, daß die Außenhülle zu der Längsachse des Lebewesens symmetrisch aufgebaut ist.

## Claims

1. Demonstration device (401) in the form of a living being enlarged at least 50 times, having an outer skin (10), which surrounds a hollow space, said demonstration device being modelled on the form of the living being and having functional elements (11) which reproduce the organs, vascular systems and/or joints etc. of the represented living being and are disposed in the hollow space, the demonstration device (401) with its functional elements (11) being reached by body-function specific route systems (12) so as to be both accessible by transport and on foot,
characterised in that
the outer skin (10) is at least partly transparent.

2. Demonstration device according to claim 1, characterised in that it is enlarged 80 to 120 times.

3. Demonstration device according to claim 1 or 2, characterised in that the outer skin (10) is supported by support elements.

4. Demonstration device according to one of the preceding claims,
characterised in that the outer skin is at least in part a transparent membrane.

5. Demonstration device according to one of the preceding claims,
characterised in that functional elements are disposed under the transparent regions of the outer skin, which display the anatomy of the region lying correspondingly at the respective place in the living being under the outer skin.

6. Demonstration device according to one of the preceding claims,
characterised in that the outer skin is configured as a monolithic shell.

7. Demonstration device according to one of the preceding claims,
characterised in that the outer skin is configured as a self-supporting enclosed area.

8. Demonstration device according to one of the preceding claims,
characterised in that the functional elements internally of the outer skin are disposed independently of their anatomically corresponding position with optimal use of the internal space of the demonstration device.

9. Demonstration device according to one of the preceding claims,
characterised in that the functional elements are configured at least in part to be accessible on foot, by transport and/or interactively.

10. Demonstration device according to one of the preceding claims,
characterised in that the route system, which is accessible by transport, has a rail system or a rail-free route system.

11. Demonstration device according to claim 10, characterised in that the travel route runs in tubes.

12. Demonstration device according to claim 10, characterised in that the travel route runs in enclosed tubes.

13. Demonstration device according to one of the claims 10 to 12,
characterised in that the rail system is a driver-less cabin system with individual, centrally-actuated carriages.

14. Demonstration device according to one of the preceding claims,
characterised in that it is modelled on the form of a human being.

15. Demonstration device according to claim 14, characterised in that the human being is bare and/or androgynous.

16. Demonstration device according to claim 14 or 15, characterised in that the human being is lying on its stomach.

17. Demonstration device according to claim 16, characterised in that the human being is lying on its stomach with its head raised.

18. Demonstration device according to one of the claims 14 to 17,
characterised in that the arms are disposed in a supporting manner in the head of the demonstration device.

19. Demonstration device according to one of the claims 14 to 18,
characterised in that upper body is supported by a sub-structure which is disposed between said upper body and the supporting surface of the
demonstration device.

20. Demonstration device according to claim 16, characterised in that the back region is pre-stressed.

21. Demonstration device according to one of the claims 14 to 20,
characterised in that the heart, liver, stomach, kidneys, gall bladder, vascular systems, nervous system, brain, gullet, digestive tract, reproductive organs, small and large joints and the sensory organs are reproduced as functional elements.

22. Demonstration device according to one of the claims 14 to 21,
characterised in that it is sub-divided into three usage zones, preferably upper body, head and the region between the waist and feet, and if necessary, a further usage zone in the sub-structure.

23. Demonstration device according to claim 22, characterised in that the upper body is configured as an extensively empty space.

24. Demonstration device according to claim 22 or 23, characterised in that the upper body contains only the access routes to the head zone and to the zone between the waist and feet as stairways and lift shafts and the like.

25. Demonstration device according one of the claims 22 to 24, characterised in that the sub-structure contains the supply technology such as supply lines, electric installations, technical rooms, workshops and the like.

26. Demonstration device according to one of the claims 22 to 25,
characterised in that the head zone and the zone between the waist and feet are linked via a spinal column which is configured to be accessible on foot.

27. Demonstration device according to one of the claims 22 to 26,
characterised in that the functional elements are disposed in the zone between the waist and feet and correspond to the organs, vascular systems etc. which are disposed anatomically in the trunk and in the legs.

28. Demonstration device according to one of the claims 22 to 27,
characterised in that the functional elements disposed in the zone between the waist and feet are at least partly accessible on foot and at least partly accessible by transport.

29. Demonstration device according to one of the claims 22 to 28,
characterised in that two rail systems are disposed in the zone between the waist and feet and lead through the functional elements, which correspond to the digestive tract and to the internal organs or through the functional elements, which correspond to the heart-circulation-lungs system.

30. Demonstration device according to one of the claims 14 to 29,
characterised in that the functional elements, which are accessible on foot and/or by transport and correspond to hollow organs, are configured in such a manner that, when the visitor is walking and/or travelling, they convey the impression of being in the organs, vascular systems etc.

31. Demonstration device according to one of the claims 14 to 29,
characterised in that the functional elements, which are accessible on foot and/or by transport and do not correspond to hollow organs, demonstrate the structure of the respective organ, vascular system etc.

32. Demonstration device according to one of the preceding claims,
characterised in that devices are disposed in the functional elements, which devices demonstrate technical analogies to the biological arrangements and/or processes taking place in the respective organs, vascular systems etc. which are displayed by the functional elements.

33. Demonstration device according to one of the preceding claims,
characterised in that the outer shell is constructed symmetrically to the longitudinal axis of the living being.

## Revendications

1. Dispositif de démonstration (401) en forme d'être vivant, agrandi au moins 50 fois, comportant une peau externe (10) enveloppant un volume creux et reproduisant la forme de l'être vivant, et des éléments fonctionnels (11) qui reproduisent les organes, les systèmes vasculaires et/ou les articulations, etc.. de l'être vivant représenté et qui sont logés dans le volume creux, le dispositif de démonstration (401), avec ses éléments fonctionnels (11) étant aménagé au moyen de systèmes de voies de circulation (12) spécifiques aux fonctions du corps, de manière à pouvoir être parcourus en roulant ou en marchant,
caractérisé en ce que
la peau externe (10) est au moins en partie, transparente.

2. Dispositif selon la revendication 1,
caractérisé en ce qu'
il présente un agrandissement de 80 à 120 fois.

3. Dispositif selon la revendication 1 ou 2,
caractérisé en ce que
la peau externe (10) est portée par des éléments de soutien.

4. Dispositif selon l'une quelconque des revendications précédentes,
caractérisé en ce que
la peau externe est, au moins en partie, constituée par une membrane transparente.

5. Dispositif selon l'une quelconque des revendications précédentes,
caractérisé en ce qu'
en dessous des zones transparentes de la peau externe sont disposés des éléments fonctionnels représentant l'anatomie de la zone de l'être vivant située sous la peau externe, à cet endroit.

6. Dispositif selon l'une quelconque des revendications précédentes,
caractérisé en ce que
la peau externe est constituée par une coque monolithique.

7. Dispositif selon l'une quelconque des revendications précédentes,
caractérisé en ce que
la peau externe est constituée par un hall autoporteur.

8. Dispositif selon l'une quelconque des revendications précédentes,
caractérisé en ce que
les éléments fonctionnels sont disposés à l'intérieur de la peau externe indépendamment de la correspondance anatomique de leur position, en utilisant au mieux le volume intérieur du dispositif de démonstration.

9. Dispositif selon l'une quelconque des revendications précédentes,
caractérisé en ce que
les éléments fonctionnels sont constitués de manière à pouvoir être, au moins partiellement, parcourus en marchant, en roulant et/ou sont de forme interactive.

10. Dispositif selon l'une quelconque des revendications précédentes,
caractérisé en ce que
le système de voies de circulation roulables comprend un système de rail ou sans rail.

11. Dispositif selon la revendication 10,
caractérisé en ce que
la voie roulable se trouve dans des tubes.

12. Dispositif selon la revendication 10,
caractérisé en ce que
la voie roulable se trouve dans des tubes fermés.

13. Dispositif selon l'une quelconque des revendications précédentes,
caractérisé en ce que
le système de voies est un système de cabine sans conducteur, utilisant des véhicules individuels à commande centralisée.

14. Dispositif selon l'une quelconque des revendications précédentes,
caractérisé en ce que
le dispositif à la forme d'un être humain.

15. Dispositif selon la revendication 14,
caractérisé en ce que
l'être humain n'est pas habillé et/ou est androgyne.

16. Dispositif selon la revendication 14 ou 15,
caractérisé en ce que
l'être humain est allongé sur le ventre.

17. Dispositif selon la revendication 16,
caractérisé en ce que
l'être humain est allongé sur le ventre avec la tête relevée.

18. Dispositif selon l'une quelconque des revendications 14 à 17,
caractérisé en ce que
les bras sont disposés de manière à supporter la tête du dispositif de démonstration.

19. Dispositif selon l'une quelconque des revendications 14 à 18,
caractérisé en ce que
la partie supérieure du corps est soutenue par une infrastructure montée entre celle-ci et la surface d'appui du dispositif de démonstration.

20. Dispositif selon la revendication 16,
caractérisé en ce que
la zone du dos est sous contrainte de tension.

21. Dispositif selon l'une quelconque des revendications 14 à 20,
caractérisé en ce que
sont reproduits en tant qu'éléments fonctionnels le coeur, le foie, l'estomac, les reins, la bile, le système vasculaire, le système nerveux, le cerveau, les conduits d'alimentation, le tube digestif, les organes de reproduction, les petites et grandes articulations, ainsi que les organes des sens.

22. Dispositif selon l'une quelconque des revendications 14 à 21,
caractérisé en ce qu'
il est divisé en trois zones d'utilisation, de préférence la partie supérieure du corps, la tête et la partie entre la taille et les pieds, avec éventuellement une autre zone d'utilisation dans l'infrastructure.

23. Dispositif selon la revendication 22,
caractérisé en ce que
la partie supérieure du corps est constituée sous la forme d'un espace largement libre.

24. Dispositif selon la revendication 22 ou 23,
caractérisé en ce que
la partie supérieure du corps comprend seulement les voies d'accès à la zone de tête ainsi qu'à la zone entre la taille et les pieds, telles que des cages d'escalier et des cages d'ascenseur et similaires.

25. Dispositif selon l'une quelconque des revendications 22 à 24,
caractérisé en ce que
l'infrastructure contient les moyens techniques d'alimentation tels que des conduites d'alimentation, des structures électriques, des locaux techniques, des ateliers et similaires.

26. Dispositif selon l'une quelconque des revendications 22 à 25,
caractérisé en ce que
la zone de tête et celle située entre la taille et les pieds sont reliées par une colonne vertébrale configurée pour une circulation à pied.

27. Dispositif selon l'une quelconque des revendications 22 à 26,
caractérisé en ce que
dans la zone entre la taille et les pieds, sont montés les éléments fonctionnels qui correspondent aux organes et systèmes vasculaires anatomiquement logés dans le tronc et dans les jambes.

28. Dispositif selon l'une quelconque des revendications 22 à 27,
caractérisé en ce que
les éléments fonctionnels montés dans la zone entre la taille et les pieds peuvent, au moins en partie, être parcourus en marchant et au moins en partie en roulant.

29. Dispositif selon l'une quelconque des revendications 22 à 28,
caractérisé en ce que
dans la zone entre la taille et les pieds, se trouvent deux systèmes à voie de roulement, qui traversent l'un des éléments fonctionnels correspondant au circuit digestif et aux organes internes, l'autre des éléments fonctionnels correspondant au système coeur-circuit sanguin-poumon.

30. Dispositif selon l'une quelconque des revendications 14 à 29,
caractérisé en ce que
les éléments fonctionnels parcourables en roulant et/ou en marchant et correspondant aux organes creux sont constitués de manière qu'en marchant et/ou en roulant, on ait l'impression de se trouver à l'intérieur des organes, du système vasculaire, etc..

31. Dispositif selon l'une quelconque des revendications 14 à 29,
caractérisé en ce que
les éléments fonctionnels qui ne correspondent pas à des organes creux et que l'on peut visiter en marchant et/ou en roulant, montrent la constitution de chacun de ces organes, du système vasculaire, etc..

32. Dispositif selon l'une quelconque des revendications précédentes,
caractérisé en ce que
dans les éléments fonctionnels sont montés des dispositifs qui montrent des analogies techniques avec les dispositifs et/ou processus biologiques qui se trouvent dans les organes, les systèmes vasculaires etc.. représentés par les éléments fonctionnels.

33. Dispositif selon l'une quelconque des revendications précédentes,
caractérisé en ce que
l'enveloppe externe a une construction symétrique par rapport à l'axe longitudinal de l'être vivant.
